# EUROPEAN PATENT APPLICATION

(11) **EP 2 151 669 A2**
(43) Date of publication of application: **10.02.2010**
(21) Application number: 09166064.7
(22) Date of filing: 21.07.2009
(51) Int. Cl.: G01C 23/00

(54) **System and method for displaying constraint information on a graphical aircraft instrument tape element**

(30) Priority: 28.07.2008 US 181096
(71) Applicant: Honeywell International Inc., Morristown, NJ 07962 (US)
(72) Inventor: Gannon, Aaron, Morristown, NJ 07962-2245 (US); He, Gang, Morristown, NJ 07962-2245 (US); Feyereisen, Thea L., Morristown, NJ 07962-2245 (US); Wyatt, Ivan S., Morristown, NJ 07962-2245 (US)
(74) Representative: Buckley, Guy Julian

(57) **Abstract**

A flight deck display system (100) for an aircraft includes a processor architecture (104) configured to receive aircraft instrument data (e.g., altimeter or airspeed) and position data for the aircraft and, based upon the instrument data and the position data, generate image rendering display commands. The system also includes a display element (106) configured to receive the image rendering display commands and, in response thereto, to render a graphical instrument tape (300). The instrument tape includes a graphical representation of a scrolling altitude or airspeed range that dynamically scrolls in response to changes in the altitude/airspeed data, along with a graphical representation of a position-dependent altitude/airspeed clearance element that conveys an altitude/airspeed restriction for an approaching geographic position of the aircraft. The content of the position-dependent clearance element (316) is influenced by the position data.

## Description

### TECHNICAL FIELD

Embodiments of the subject matter described herein relate generally to avionics systems such as flight display systems. More particularly, embodiments of the subject matter relate to graphical altimeter and airspeed tape elements that can be utilized with a flight deck display system.

### BACKGROUND

Modem flight deck displays for vehicles (such as aircraft or spacecraft) display a considerable amount of information, such as vehicle position, speed, altitude, attitude, navigation, target, and terrain information. In the case of an aircraft, most modem displays additionally display a flight plan from different views, either a lateral view, a vertical view, or a perspective view, which can be displayed individually or simultaneously on the same display.

The lateral view, generally known as a lateral map display, is basically a top-view of the flight plan, and may include, for example, a top-view aircraft symbol, waypoint symbols, line segments that interconnect the waypoint symbols, and range rings. The lateral map may also include various map features including, for example, weather information, terrain information, political boundaries, and navigation aids. The terrain information may include situational awareness (SA) terrain, as well as terrain cautions and warnings which, among other things, may indicate terrain that may impact the aircraft. The perspective view provides a three-dimensional view of the vehicle flight plan and may include one or more of the above-mentioned features that are displayed on the lateral map, including the terrain information.

Altitude data may be displayed as a numerical value that indicates the present altitude in appropriate units, such as feet or meters. An altimeter tape is a graphical element that can be used to display altitude information on a flight deck display element in an easy-to-read manner. An altimeter tape is typically rendered as a small window having a scrolling numerical range dynamically displayed therein. As the altitude of the aircraft changes, the altitude scale of the tape dynamically adjusts such that the current altitude is displayed at a designated location, e.g., near the center of the window. Thus, if the aircraft is flying at a constant altitude of 6500 feet, the altitude scale will appear stationary, with the number 6500 centered in the window. If the aircraft begins to descend, the altitude scale will begin to scroll within the window, the number 6500 will migrate towards the top of the window, and lower elevation numbers will appear near the bottom of the window and begin migrating upwards. Airspeed data can be displayed in a similar manner on an airspeed tape. Traditional airspeed tapes include a scrolling airspeed range and a window in which the current aircraft airspeed is displayed.

### BRIEF SUMMARY

A flight deck display system, a display element, and related operating methods described herein can be utilized to display altitude constraint or restriction information along with an altimeter tape element. The altimeter tape can display the altitude of the aircraft in a dynamic scrolling manner, while concurrently displaying information associated with certain geographical waypoints or locations that might have altitude restrictions (target altitudes, minimum altitudes, or maximum altitudes) assigned thereto.

In accordance with one embodiment, a flight deck display system for an aircraft is provided. The system includes a processor architecture and a display element coupled to the processor architecture. The processor architecture is configured to receive altitude data and position data for the aircraft and, based upon the altitude data and the position data, generate image rendering display commands. The display element is configured to receive the image rendering display commands and, in response thereto, to render a graphical altimeter tape. The altimeter tape includes a graphical representation of a scrolling altitude range that dynamically scrolls in response to changes in the altitude data, and also a graphical representation of a position-dependent altitude clearance element that conveys an altitude restriction for an approaching position of the aircraft. The content of the position-dependent altitude clearance element is influenced by the position data.

The above and other aspects may be carried out by an embodiment of a flight deck display element having rendered thereon a dynamic graphical instrument tape. The instrument tape conveys a graphical representation of a scrolling range that includes a current value of an aircraft operating parameter, where the scrolling range dynamically scrolls in response to changes in the aircraft operating parameter. The instrument tape also conveys a graphical representation of a position-dependent clearance element. The position-dependent clearance element has at least one feature that dynamically scrolls with the scrolling altitude range.

An embodiment of a method for displaying altitude information on a flight deck display element of an aircraft is also provided. The method processes altitude data and position data for the aircraft, and obtains position-dependent altitude restriction data based upon the position data. In response to the altitude data and the position-dependent altitude restriction data, a dynamic graphical altimeter tape is displayed on the flight deck display element. The dynamic graphical altimeter tape includes a graphical representation of a scrolling altitude range that dynamically scrolls in response to changes in the altitude data. The altimeter tape also includes a graphical representation of an altitude clearance element that is influenced by the position-dependent altitude restriction data.

This summary is provided to introduce a selection of concepts in a simplified form that are further described below in the detailed description. This summary is not intended to identify key features or essential features of the claimed subject matter, nor is it intended to be used as an aid in determining the scope of the claimed subject matter.

### BRIEF DESCRIPTION OF THE DRAWINGS

A more complete understanding of the subject matter may be derived by referring to the detailed description and claims when considered in conjunction with the following figures, wherein like reference numbers refer to similar elements throughout the figures.

FIG. 1 is a schematic representation of an embodiment of a flight deck display system;

FIG. 2 is a simplified chart that illustrates a flight plan of an aircraft relative to three geographical waypoints;

FIG. 3 is a schematic representation of an embodiment of a graphical altimeter tape;

FIG. 4 is a schematic representation of the graphical altimeter tape as rendered to display a different altitude;

FIG. 5 is a schematic representation of the graphical altimeter tape as rendered to display yet another altitude;

FIG. 6 is a schematic representation of an embodiment of a graphical lateral situation display element; and

FIG. 7 is a schematic representation of an embodiment of a graphical airspeed tape.

### DETAILED DESCRIPTION

The following detailed description is merely illustrative in nature and is not intended to limit the embodiments of the subject matter or the application and uses of such embodiments. As used herein, the word "exemplary" means "serving as an example, instance, or illustration." Any implementation described herein as exemplary is not necessarily to be construed as preferred or advantageous over other implementations. Furthermore, there is no intention to be bound by any expressed or implied theory presented in the preceding technical field, background, brief summary or the following detailed description.

Techniques and technologies may be described herein in terms of functional and/or logical block components, and with reference to symbolic representations of operations, processing tasks, and functions that may be performed by various computing components or devices. Such operations, tasks, and functions are sometimes referred to as being computer-executed, computerized, software-implemented, or computer-implemented. It should be appreciated that the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

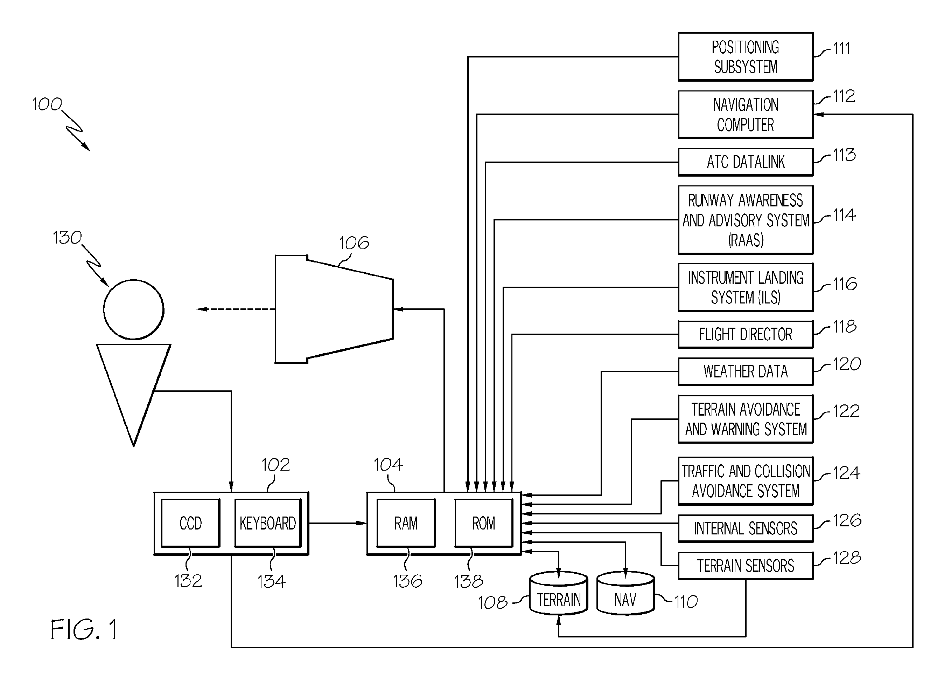

The following description refers to elements or nodes or features being "coupled" together. As used herein, unless expressly stated otherwise, "coupled" means that one element/node/feature is directly or indirectly joined to (or directly or indirectly communicates with) another element/node/feature, and not necessarily mechanically. Thus, although the schematic shown in FIG. 1 depicts one exemplary arrangement of elements, additional intervening elements, devices, features, or components may be present in an embodiment of the depicted subject matter.

Traditional means of displaying approach procedures for aircraft require the pilot to refer to paper, a log book, a displayed image of paper, or a separate lateral map display. Altitude constraint information, which specifies acceptable descent altitudes based upon the position (e.g., latitude and longitude) of the aircraft, is a particularly important component of these procedures. However, to act on the information with the appropriate display (the altimeter), the pilot has to rehearse, remember, or review the constraint information until the constraint is safely passed. This traditional procedure can be cumbersome and it can create an additional workload burden on the flight crew.

In accordance with the embodiments described herein, a graphically displayed altimeter instrument (an altimeter tape) includes altitude restriction information that is concurrently displayed in concert with the scrolling altitude scale of the altimeter. Access to terminal approach procedure charts facilitates the gathering of altitude constraint information, and allows the flight deck display system to present such constraint information at the appropriate time on the altimeter tape. This display technique enables the pilot to quickly and intuitively view both the current altitude data and any approaching altitude constraints on an integrated altimeter tape display.

FIG. 1 is a schematic representation of an embodiment of a flight deck display system 100 for an aircraft. System 100 may be utilized to generate and render an altimeter tape and/or an airspeed tape having the graphical features and elements described herein. For the sake of brevity, conventional techniques related to avionics instrumentation, graphics processing and rendering, positioning/locationing systems, and other functional aspects of the systems (and the individual operating components of the systems) may not be described in detail herein. Furthermore, the connecting lines shown in the various figures contained herein are intended to represent exemplary functional relationships and/or physical couplings between the various elements. It should be noted that many alternative or additional functional relationships or physical connections may be present in an embodiment of the subject matter.

FIG. 1 depicts an exemplary flight deck display system 100 that generally includes, without limitation: a user interface 102; a processor architecture 104 coupled to user interface 102; and a display element 106 coupled to processor architecture 104. System 100 may also include, cooperate with, and/or communicate with a number of databases, sources of data, or the like. Moreover, system 100 may include, cooperate with, and/or communicate with a number of external subsystems as described in more detail below. For example, processor architecture 104 may cooperate with one or more of the following components, features, data sources, and subsystems, without limitation: one or more terrain databases 108; one or more navigation databases 110; a positioning subsystem 111; a navigation computer 112; an air traffic control (ATC) datalink 113; a runway awareness and advisory system (RAAS) 114; an instrument landing system (ILS) 116; a flight director 118; a source of weather data 120; a terrain avoidance and warning system (TAWS) 122; a traffic and collision avoidance system (TCAS) 124; one or more inertial sensors 126; and one or more terrain sensors 128.

User interface 102 is in operable communication with processor architecture 104 and is configured to receive input from a user 130 (e.g., a pilot) and, in response to the user input, supply command signals to processor architecture 104. User interface 102 may be any one, or combination, of various known user interface devices including, but not limited to, a cursor control device (CCD) 132, such as a mouse, a trackball, or joystick, one or more buttons, switches, or knobs. In the depicted embodiment, user interface 102 includes CCD 132 and a keyboard 134. The user 130 manipulates CCD 132 to, among other things, move cursor symbols that might be rendered at various times on display element 106, and the user 130 may manipulate keyboard 134 to, among other things, input textual data. As depicted in FIG. 1, user interface 102 may also be utilized to enable user interaction with navigation computer 112, the flight management system, and/or other features and components of the aircraft.

Processor architecture 104 may utilize one or more known general-purpose microprocessors or an application specific processor that operates in response to program instructions. In the depicted embodiment, processor architecture 104 includes or communicates with onboard RAM (random access memory) 136, and onboard ROM (read only memory) 138. The program instructions that control processor architecture 104 may be stored in either or both RAM 136 and ROM 138. For example, the operating system software may be stored in ROM 138, whereas various operating mode software routines and various operational parameters may be stored in RAM 136. It will be appreciated that this is merely exemplary of one scheme for storing operating system software and software routines, and that various other storage schemes may be implemented. It will also be appreciated that processor architecture 104 may be implemented using various other circuits, not just a programmable processor. For example, digital logic circuits and analog signal processing circuits could also be used.

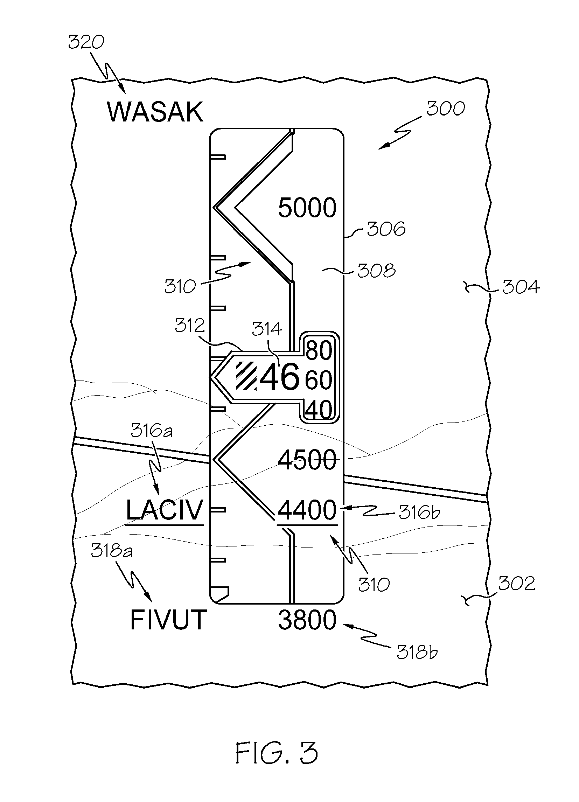

Processor architecture 104 is in operable communication with terrain database 108, navigation database 110, and display element 106, and is coupled to receive various types of data, information, commands, signals, etc., from the various sensors, data sources, instruments, and subsystems described herein. For example, processor architecture 104 is suitably configured to obtain and process avionics-related data as needed to generate a graphical representation of dynamic altimeter and airspeed tapes having the features and characteristics described below with reference to FIGS. 3-5.

In certain embodiments, processor architecture 104 is configured to respond to inertial data obtained by inertial sensors 126 to selectively retrieve terrain data from terrain database 108 or terrain sensor 128 and navigation data from navigation database 110. Processor architecture 104 can also supply appropriate display commands to display element 106, so that the retrieved terrain and navigation data are appropriately displayed on display element 106. Processor architecture 104 is further configured to receive airspeed, altitude, and geographic position data for the aircraft and, based upon that data, generate image rendering commands associated with the display of graphical altimeter and airspeed tapes that include graphical representations of a position-dependent clearance or constraint elements. The preferred manner in which the altitude, airspeed, and constraint data are displayed on display element 106 will be described in more detail further below.

Display element 106 is used to display various images and data, in both a graphical and a textual format, and to supply visual feedback to the user 130 in response to the user input commands supplied by the user 130 to user interface 102. It will be appreciated that display element 106 may be any one of numerous known displays suitable for rendering image and/or text data in a format viewable by the user 130. Nonlimiting examples of such displays include various cathode ray tube (CRT) displays, and various flat panel displays such as, various types of LCD (liquid crystal display), OLED, and TFT (thin film transistor) displays. Display element 106 may additionally be based on a panel mounted display, a HUD projection, or any known technology. In an exemplary embodiment, display element 106 includes a panel display, and display element 106 is suitably configured to receive image rendering commands from processor architecture 104 and, in response thereto, display element 106 renders graphical aircraft instrument tapes having certain features and characteristics. To provide a more complete description of the operating method that is implemented by system 100, a general description of display element 106 and various graphical features rendered thereon will provided below with reference to FIGS. 3-7.

As FIG. 1 shows, processor architecture 104 is in operable communication with the source of weather data 120, TAWS 122, and TCAS 124, and is additionally configured to generate, format, and supply appropriate display commands to display element 106 so that the avionics data, weather data 120, data from TAWS 122, data from TCAS 124, and data from the previously mentioned external systems may also be selectively rendered in graphical form on display element 106. The data from TCAS 124 can include Automatic Dependent Surveillance Broadcast (ADS-B) messages.

Terrain database 108 includes various types of data, including elevation data, representative of the terrain over which the aircraft is flying. The data in terrain database 108 can be pre-loaded by external data sources or provided in real-time by terrain sensor 128. Terrain sensor 128 provides real-time terrain data to processor architecture 104 and/or terrain database 108. In one embodiment, terrain data from terrain sensor 128 is used to populate all or part of terrain database 108, while in another embodiment, terrain sensor 128 provides information directly, or through components other than terrain database 108, to processor architecture 104.

In another embodiment, terrain sensor 128 can include visible, low-light TV, infrared, lidar, or radar-type sensors that collect and/or process terrain data. For example, terrain sensor 128 can be a radar sensor that transmits radar pulses and receives reflected echoes, which can be amplified to generate a radar signal. The radar signals can then be processed to generate three-dimensional orthogonal coordinate information having a horizontal coordinate, vertical coordinate, and depth or elevation coordinate. The coordinate information can be stored in terrain database 108 or processed for display on display element 106.

In one embodiment, the terrain data provided to processor architecture 104 is a combination of data from terrain database 108 and terrain sensor 128. For example, processor architecture 104 can be programmed to retrieve certain types of terrain data from terrain database 108 and other certain types of terrain data from terrain sensor 128. In one embodiment, terrain data retrieved from terrain sensor 128 can include moveable terrain, such as mobile buildings and systems. This type of terrain data is better suited for terrain sensor 128 to provide the most up-to-date data available. For example, types of information such as waterbody information and geopolitical boundaries can be provided by terrain database 108. When terrain sensor 128 detects, for example, a waterbody, the existence of such can be confirmed by terrain database 108 and rendered in a particular color such as blue by processor architecture 104.

Navigation database 110 includes various types of navigation-related data stored therein. In preferred embodiments, navigation database 110 is an onboard database that is carried by the aircraft. The navigation-related data include various flight plan related data such as, for example, and without limitation: geographical waypoints; restricted, constrained, or target altitude values (such as target altitudes, upper altitude limits, or lower altitude limits) corresponding to geographical waypoints; distances between waypoints; track between waypoints; restricted, constrained, or target airspeed values (such as target airspeeds, upper airspeed limits, or lower airspeed limits) corresponding to geographical waypoints; data related to different airports; navigational aids; obstructions; special use airspace; restricted, constrained, or target altitude/airspeed values corresponding to special use airspace; political boundaries; communication frequencies; and aircraft approach information. In one embodiment, combinations of navigation-related data and terrain data can be displayed. For example, terrain data gathered by terrain sensor 128 and/or terrain database 108 can be displayed with navigation data such as waypoints, airports, etc. from navigation database 110, superimposed thereon. As described in more detail below, processor architecture 104 may be suitably configured to access position-dependent and/or geographically correlated altitude or airspeed constraint information from navigation database 110, and process such constraint information for display with a scrolling altitude range or scale of a graphically rendered instrument tape.

Although terrain database 108 and navigation database 110 are, for clarity and convenience, shown as being stored separate from processor architecture 104, all or portions of either or both of these databases 108, 110 could be loaded into the onboard RAM 136, stored in ROM 138, or integrally formed as part of processor architecture 104. Terrain database 108 and navigation database 110 could also be part of a device or system that is physically separate from system 100.

Positioning subsystem 111 is suitably configured to obtain position data for the aircraft. In practice, positioning subsystem 111 monitors the current position of the aircraft in real-time, and the real-time position data can be used by one or more other subsystems, processing modules, or equipment on the aircraft (e.g., navigation computer 112, RAAS 114, ILS 116, flight director 118, TAWS 122, or TCAS 124). In certain embodiments, positioning subsystem 111 is realized using global positioning system (GPS) technologies that are commonly deployed in avionics applications. Thus, the position data obtained by positioning subsystem 111 may represent the latitude and longitude of the aircraft in an ongoing and continuously updated manner.

The avionics data that is supplied from inertial sensors 126 includes data representative of the state of the aircraft such as, for example, aircraft speed, altitude, and heading. Inertial sensors 126 can include MEMS-based, ADHRS-related, or any other type of inertial sensor. Inertial sensors 126 may include at least one sensor that is suitably configured to obtain altitude data for the aircraft, where the altitude data represents the current real-time altitude of the aircraft. As understood by those familiar with avionics instruments, the altitude data is preferably updated in a continuous and ongoing manner. As described in more detail below, system 100 obtains and processes airspeed and/or altitude data for rendering in connection with graphical airspeed and/or altimeter tapes.

The weather data 120 supplied to processor architecture 104 is representative of at least the location and type of various weather cells. The data supplied from TCAS 124 includes data representative of other aircraft in the vicinity, which may include, for example, speed, direction, altitude, and altitude trend. In a preferred embodiment, processor architecture 104, in response to the TCAS data, supplies appropriate display commands to display element 106 such that a graphic representation of each aircraft in the vicinity is displayed on display element 106. TAWS 122 supplies data representative of the location of terrain that may be a threat to the aircraft. Processor architecture 104, in response to the TAWS data, preferably supplies appropriate display commands to display element 106 such that the potential threat terrain is displayed in various colors depending on the level of threat. For example, red is used for warnings (immediate danger), yellow is used for cautions (possible danger), and green is used for terrain that is not a threat. It will be appreciated that these colors and number of threat levels are merely exemplary, and that other colors and different numbers of threat levels can be provided as a matter of choice.

As was previously alluded to, one or more other external systems (or subsystems) may also provide avionics-related data to processor architecture 104 for display on display element 106. In the depicted embodiment, these external systems include a flight director 118, an instrument landing system (ILS) 116, a runway awareness and advisory system (RAAS) 114, and a navigation computer 112. Flight director 118, as is generally known, supplies command data representative of commands for piloting the aircraft in response to flight crew entered data, or various inertial and avionics data received from external systems. The command data supplied by flight director 118 may be supplied to processor architecture 104 and displayed on display element 106 for use by the user 130, or the data may be supplied to an autopilot (not illustrated). The autopilot, in turn, produces appropriate control signals that cause the aircraft to fly in accordance with the flight crew entered data, or the inertial and avionics data.

ILS 116 is a radio navigation system that provides aircraft with horizontal and vertical guidance just before and during landing and, at certain fixed points, indicates the distance to the reference point of landing. The system includes ground-based transmitters (not shown) that transmit radio frequency signals. ILS 116 onboard the aircraft receives these signals and supplies appropriate data to the processor for display of, for example, an ILS feather (not shown in FIG. 1) on the display element 106. The ILS feather represents two signals, a localizer signal that is used to provide lateral guidance, and a glide slope signal that is used for vertical guidance.

RAAS 114 provides improved situational awareness to help lower the probability of runway incursions by providing timely aural advisories to the flight crew during taxi, takeoff, final approach, landing and rollout. RAAS 114 uses GPS data to determine aircraft position and compares aircraft position to airport location data stored in navigation database 110. Based on these comparisons, RAAS 114, if necessary, issues appropriate aural advisories. Aural advisories, which may be issued by RAAS 114, inform the user 130, among other things of when the aircraft is approaching a runway, either on the ground or from the air at times such as when the aircraft has entered and is aligned with a runway, when the runway is not long enough for the particular aircraft, the distance remaining to the end of the runway as the aircraft is landing or during a rejected takeoff, when the user 130 inadvertently begins to take off from a taxiway, and when an aircraft has been immobile on a runway for an extended time. During approach, data from sources such as GPS, including RNP and RNAV, can also be considered.

Navigation computer 112 is used, among other things, to allow the user 130 to program a flight plan from one destination to another. Navigation computer 112 may be in operable communication with flight director 118. As was mentioned above, flight director 118 may be used to automatically fly, or assist the user 130 in flying, the programmed route. Navigation computer 112 is in operable communication with various databases including, for example, terrain database 108, and navigation database 110. Processor architecture 104 may receive the programmed flight plan data from navigation computer 112 and cause programmed flight plan, or at least portions thereof, to be displayed on display element 106.

ATC datalink 113 is utilized to provide air traffic control data to system 100, preferably in compliance with known standards and specifications. Using ATC datalink, processor architecture 104 can receive air traffic control data from ground based air traffic controller stations and equipment. In turn, system 100 can utilize such air traffic control data as needed.

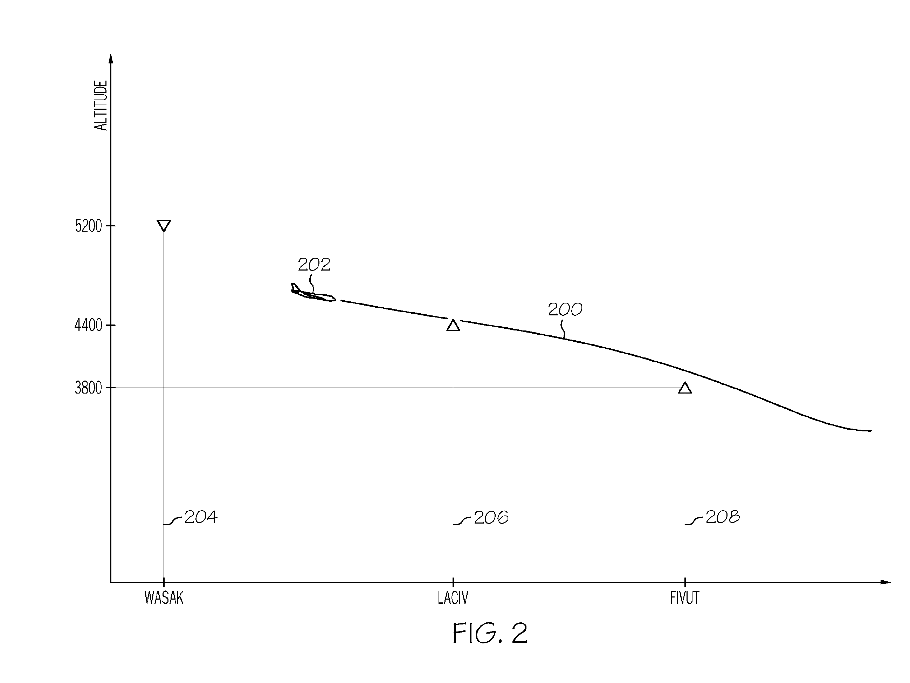

FIG. 2 is a simplified chart that illustrates a flight plan 200 of an aircraft 202 relative to three geographical waypoints. The vertical axis represents altitude in feet, and the horizontal axis represents lateral position or distance, and the chart depicts aircraft 202 in a descent pattern. For this example, each geographical waypoint corresponds to a stationary reference point, which may in turn correspond to a designated latitude and longitude, a designated set of GPS coordinates, or the like. FIG. 2 shows that aircraft 202 has already passed a first geographical waypoint 204 identified by the label WASAK, and that aircraft 202 is approaching a second geographical waypoint 206 identified by the label LACIV. In accordance with the illustrated flight plan 200, aircraft 202 will ultimately pass a third geographical waypoint 208 identified by the label FIVUT. A given geographical waypoint, region, or zone may be associated with an altitude (or airspeed) restriction, constraint, target, clearance, guideline, regulation, or limitation, which may be dictated or influenced by factors such as, without limitation: the particular flight plan; the departure airport; the destination airport; the class of aircraft; whether the aircraft is flying in special use or restricted airspace; whether the aircraft is flying in an altitude-regulated airway; or the like.

A given geographical waypoint or region may be associated with an appropriate type of altitude or airspeed constraint. For example, a target altitude or altitude range may be specified to ensure that the aircraft is flying at a tightly controlled altitude. Alternatively, a waypoint or region may be governed by an upper altitude limit (i.e., an "at or below" constraint) or a lower altitude limit (i.e., an "at or above" constraint) for aircraft. For the example depicted in FIG. 2, the first geographical waypoint 204 has an altitude restriction of 5200 feet, the second geographical waypoint 206 has an altitude restriction of 4400 feet, and the third geographical waypoint 208 has an altitude restriction of 3800 feet. Similarly, a given waypoint may have an associated airspeed constraint assigned thereto (e.g., maximum airspeed, minimum airspeed, target airspeed, an airspeed range, etc.).

In operation, a flight deck display system as described herein is suitably configured to process altitude data, airspeed data, and geographic position data for the aircraft, and obtain position-dependent restriction or constraint data based upon the position data. In response to the altitude data, the airspeed data, and the position-dependent restriction/constraint data, the display system can generate and display an appropriately formatted dynamic graphical altimeter tape (and/or airspeed tape) on its display element. The altimeter tape conveys information related to geographical waypoints, regions, and/or airspace having associated altitude constraints or restrictions. In this regard, FIG. 3 is a schematic representation of an embodiment of a graphical altimeter tape 300 that can be rendered on a flight deck display element. In practice, altimeter tape 300 may be one of any number of graphical elements rendered on the flight deck display element, e.g., an airspeed tape, flight data, navigation tracing lines, compass heading data, and the like. For the sake of clarity, simplicity, and brevity, such additional graphical elements are not shown or described here.

Although not always required, the illustrated embodiment of altimeter tape 300 is rendered as a transparent or translucent window that overlays a graphical representation of terrain 302 and/or a graphical representation of airspace 304. This allows the system to render terrain 302 and airspace 304 in a dynamic and substantially unobstructed manner, while still displaying altimeter tape 300 to the pilot. Of course, alternate embodiments may utilize an opaque or solid altimeter tape 300 that obscures a portion of terrain 302 and airspace 304. This embodiment of altimeter tape 300 generally includes, without limitation: an outline 306 that defines a primary region 308; a scrolling altitude range or scale 310; and a focus window 312. It should be appreciated that these and other features, elements, and indicia of altimeter tape 300 are graphical representations that are rendered on the flight deck display element in an appropriate manner.

Outline 306 represents the boundary of primary region 308, and scrolling altitude range 310 can be displayed within outline 306, as shown. In operation, scrolling altitude range 310 may dynamically scroll (up and down) within outline 306 in response to altitude changes of the aircraft. For this embodiment, outline 306 and primary region 308 remain stationary relative to scrolling altitude range 310, terrain 302, and airspace 304. In other words, when viewed by the user, outline 306 and primary region 308 appear in a fixed position on the display screen. Altimeter tape 300 also includes focus window 312 for scrolling altitude range 310. In certain embodiments, focus window 312 is rendered such that it remains stationary relative to scrolling altitude range 310, terrain 302, and airspace 304. As shown in FIG. 3, this embodiment of focus window 312 is generally shaped as a sideways T-shaped element located at or near the longitudinal center of primary region 308. Scrolling altitude range 310 includes or identifies a current altitude value 314, which is displayed within focus window 312. As depicted in FIG. 3, current altitude value 314 may be rendered within focus window 312 using a larger font such that current altitude value 314 appears to be magnified within focus window 312. In addition, current altitude value 314 may be displayed in focus window 312 using a different scale resolution than that used on the remainder of scrolling altitude range 310. For example, within focus window 312, current altitude value 314 may be displayed in increments of ten or twenty feet, while altitude values outside of focus window 312 may be displayed in increments of one hundred feet.

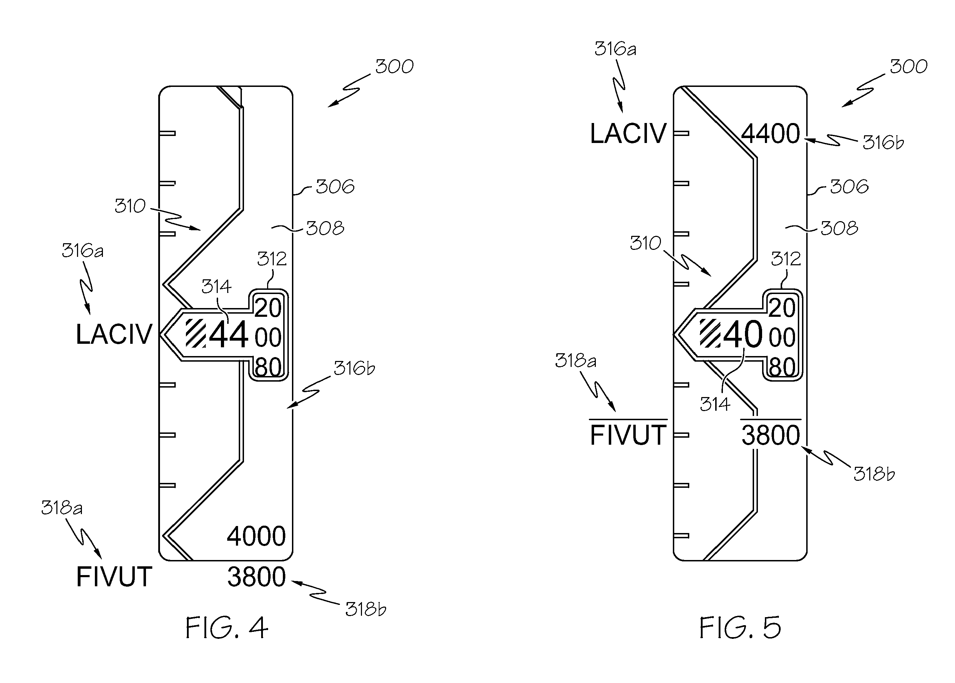

As mentioned above, scrolling altitude range 310 includes current altitude value 314 (4660 feet in FIG. 3). Scrolling altitude range 310 may also include at least one altitude value other than current altitude value 314. In this regard, for the state depicted in FIG. 3, scrolling altitude range 310 includes indicia of 5000 feet and 4500 feet in addition to indicia of current altitude value 314. Referring to FIG. 4 and FIG. 5, scrolling altitude range 310 dynamically moves upward or downward in response to the current altitude data for the aircraft. FIG. 4 depicts the rendered state of altimeter tape 300 after the aircraft has descended to an altitude of 4400 feet, and FIG. 5 depicts the rendered state of altimeter tape 300 after the aircraft has descended to an altitude of 4000 feet. In operation, scrolling altitude range 310 appears to move within primary region 308, while the current measured altitude remains highlighted within focus window 312.

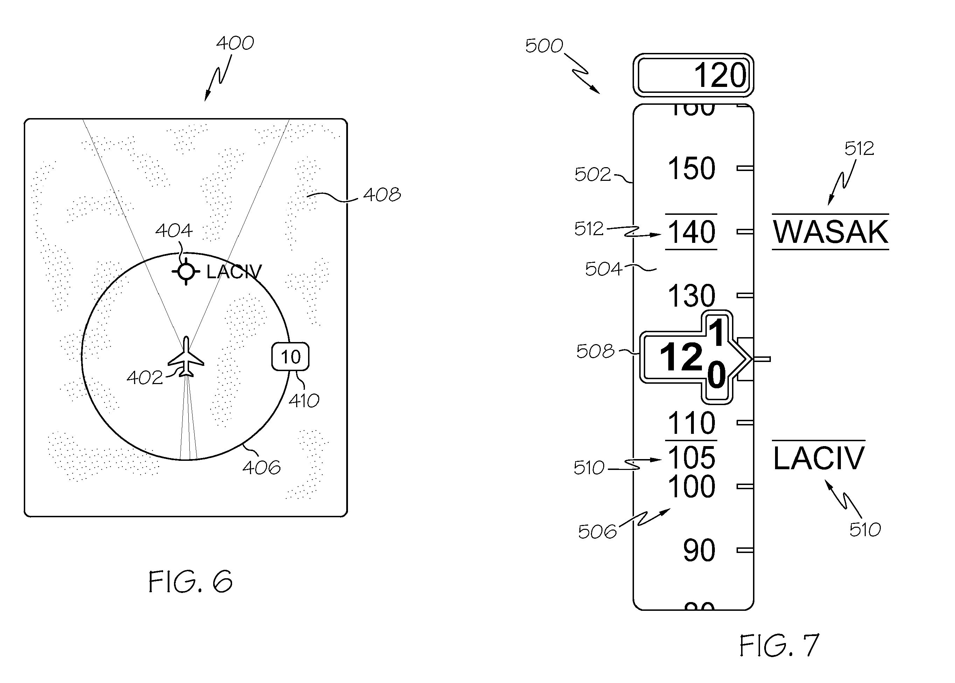

A flight deck display system may also render a lateral situation display element concurrently with altimeter tape 300. In this regard, FIG. 6 is a schematic representation of an embodiment of such a graphical lateral situation display element 400. Lateral situation display element 400 can display information based on data from a number of sources, including the various sensors, sources, and subsystems described above with reference to FIG. 1. The lateral situation display element 400 includes a top-view aircraft symbol 402, at least portion of a flight plan represented by one or more waypoint symbols 404, and one or more range rings 406. Lateral situation display element 400 also preferably includes various map features including, but not limited to, a lateral two-dimensional view of terrain 408 below the flight plan, political boundaries, and navigation aids. Range rings 406 may be used to indicate sequential ranges, such as fixed distance or time ranges needed to travel from the current position indicated by the top-view aircraft symbol 402 to another position on the terrain 408, or any other information that may be useful to a pilot. In the illustrated embodiment, the range rings 406 indicate distances from the aircraft symbol 402. The range ring 406 includes a range indicator 410, which displays the lateral distance from the present position to the position that corresponds to the range ring 406 (e.g., 10 nautical miles).

The depicted state of lateral situation display element 400 corresponds to the depicted state of altimeter tape 300 in FIG. 3, and to the depicted state of aircraft 202 shown in FIG. 2. In other words, the aircraft is descending and approaching the geographical waypoint labeled LACIV, which is rendered on lateral situation display element 400 as a corresponding waypoint symbol 404. The combination of altimeter tape 300 and lateral situation display element 400 provides useful and intuitive information to the flight crew in a simple graphical manner.

Referring again to FIG. 3, altimeter tape 300 preferably includes a graphical representation of at least one position-dependent altitude clearance element that conveys an altitude restriction, constraint, regulation, or limitation for an approaching or current position of the aircraft. FIG. 3 depicts an altitude clearance element 316 corresponding to a currently approaching position, and another altitude clearance element 318 corresponding to a next-approaching position. FIG. 3 also depicts an altitude clearance element 320 corresponding to a previous position. Depending upon the implementation and deployment of the host system, the data representing the graphical altitude clearance elements may be included or otherwise associated with the onboard flight plan. Alternatively, the data representing the graphical altitude clearance elements could be provided to the onboard system via, for example, ATC datalink 113 (see FIG. 1) for imbedding or incorporating into the onboard flight plan.

The appearance and content of a position-dependent altitude clearance element may be influenced, based upon, or otherwise associated with the current geographic position data of the aircraft. For instance, a position-dependent altitude clearance element may be tied to a geographical waypoint - FIG. 3 depicts such an embodiment. Here, altitude clearance element 316 corresponds to the geographical waypoint labeled LACIV. Consequently, altitude clearance element 316 may include alphanumeric indicia 316a of this approaching geographical waypoint. For this embodiment, altitude clearance element 316 also includes an approaching altitude value 316b corresponding to the approaching geographical waypoint. Notably, approaching altitude value 316b may be rendered as an additional entry on scrolling altitude range 310, as shown in FIG. 3. Thus, approaching altitude value 316b can dynamically scroll with scrolling altitude range 310. Moreover, alphanumeric indicia 316a can also scroll with scrolling altitude range 310 (even though it might be rendered outside of primary region 308 and relatively decoupled from scrolling altitude range 310). FIGS. 3-5 illustrate this scrolling characteristic of altitude clearance element 316.

Altitude clearance element 320 is associated with a geographical waypoint (labeled WASAK) that has already been passed by the aircraft and is no longer within the confines of scrolling altitude range 310. Accordingly, the flight deck display system may render altitude clearance element 320 such that it has at least one feature in a stationary position relative to scrolling altitude range 310. In other words, altitude clearance element 320 may remain in a fixed location (as shown in FIG. 3) above primary region 308, at least until another geographical waypoint is passed or until the next altitude clearance element is no longer within the confines of scrolling altitude range 310. Altitude clearance element 318 is associated with a geographical waypoint (labeled FIVUT) that follows the immediately upcoming waypoint (labeled LACIV) in the approach path. Depending upon the current position of the aircraft, the altitude constraint associated with an upcoming waypoint might be off the scale of scrolling altitude range 310. This applies to altitude clearance element 318 in this example. Under such circumstances, the flight deck display system may render altitude clearance element 318 such that it has at least one feature that remains stationary relative to scrolling altitude range 310. For example, alphanumeric indicia 318a and/or approaching altitude value 318b may remain in a fixed position (see FIG. 3) below primary region 308 until the approaching altitude value 318b can be displayed on scrolling altitude range 310 within primary region 308.

An altitude value rendered with altimeter tape 300 may represent an altitude restriction, constraint, guideline, regulation, or limitation for a respective position, region, geographical waypoint, airspace boundary, airway, or the like. Preferred embodiments of the flight deck display system generate additional graphical indicia that convey supplemental information related to such altitude values. For example, a line displayed under a position-dependent altitude clearance element indicates that the altitude clearance element indicates a lower altitude limit (i.e., an "at or above" constraint) at that particular position. Altitude clearance element 316 in FIG. 3 is one example of an underlined "at or above" constraint. Conversely, a line displayed over a position-dependent altitude clearance element indicates that the altitude clearance element indicates an upper altitude limit (i.e., an "at or below" constraint) at that particular position. Altitude clearance element 318 in FIG. 5 is one example of an over-lined "at or below" constraint. An altitude clearance element that includes both underlining and over-lining (or, equivalently, an altitude clearance element having no underlining or over-lining) indicates a target altitude or altitude range. In certain embodiments, this underlining and over-lining scheme may be selectively applied to altitude clearance elements that can be displayed with scrolling altitude range 310. In other words, underlining and over-lining may be omitted for altitude clearance elements that appear outside primary region 308 (e.g., altitude clearance elements 318 and 320). Furthermore, the underlining and over-lining is preferably maintained and preserved as the altitude clearance elements scroll through focus window 312.

To accommodate the dynamic nature of altimeter tape 300, the rendering of certain graphical elements, features, numbers, indicia, or portions thereof may be modified to resolve display conflicts, reduce clutter, and improve readability. For example, if an altitude clearance element includes an altitude value that is close to a number on scrolling altitude range 310, then the number on scrolling altitude range 310 may be blanked to allow the altitude constraint value to be fully displayed. Otherwise, there may be overlapping or superimposed characters, numbers, or graphical elements displayed on altimeter tape 300.

Additional information associated with a given waypoint may be conveyed along with its associated altitude clearance element. For example, if a waypoint corresponds to the initial approach fix for the aircraft, then the label "IAF" may be rendered on the altimeter tape. Similar labels can be displayed for the final approach fix ("FAF") and for a missed approach point ("MAP"). As another example, an appropriate icon could be displayed on the altimeter tape to indicate the glideslope intercept. This icon may depict, for example, a lightning bolt with an arrowhead.

The flight deck display system may also change the appearance of altitude clearance elements to convey additional information to the flight crew. For example, an altitude clearance element may be rendered using a distinguishable color, font, size, texture, transparency, or the like, and the distinguishable characteristic (or characteristics) may have contextually relevant meaning. Certain embodiments employ a color scheme associated with auto pilot control. In this regard, an approaching altitude clearance element is displayed in a first color (such as magenta) to indicate that the auto pilot subsystem is controlling the aircraft to satisfy the particular altitude constraint at the designated geographical waypoint or position. Thus, altitude clearance element 316-LACIV 4400 - may be displayed using magenta colored text to convey that the auto pilot subsystem is directing the aircraft toward the LACIV waypoint at a minimum altitude of 4400 feet. A second color (such as cyan) may be used to indicate an upcoming waypoint or altitude constraint to which the auto pilot subsystem is not currently controlling. In this regard, altitude clearance element 318 - FIVUT 3800 - may be displayed using cyan colored text to convey that the auto pilot subsystem is not yet (but soon will be) directing the aircraft toward the FIVUT waypoint. After the aircraft passes the LACIV waypoint, altitude clearance element 318 will change from cyan to magenta. Moreover, after the aircraft passes the LACIV waypoint, altitude clearance element 316 will change from magenta to a third color (such as white or transparent) to convey that the corresponding waypoint - LACIV - is now behind the aircraft.

As an added feature, the flight deck display system may display on the altimeter tape an indicator, scale, value, or notification that directs the pilot toward the next approaching waypoint. For example, the altimeter tape may display the current rate of descent/ascent on a relatively compact scale, along with some indicia of a target rate that must be achieved (or maintained) in order for the aircraft to meet the next altitude constraint. This indicia may be a simple trend indicator having a variable length (where longer corresponds to a higher rate of descent/ascent, and where shorter corresponds to a lower rate of descent/ascent), or a target marker rendered on a scale.

Although the exemplary embodiment described herein focuses on altitude constraints corresponding to geographic waypoints, a system may also be capable of displaying altitude clearance elements for altitude constraints corresponding to geographic positions that occur before or after waypoints (by a certain distance). In other words, an altitude clearance element displayed on an altimeter tape as described herein need not be pinned to a geographic waypoint. Rather, an altitude clearance element may represent an altitude constraint for a point two miles before or after the next waypoint.

In certain embodiments, TCAS 124 (see FIG. 1) may be leveraged to display TCAS resolution advisory limits on the altimeter tape. In this regard, data from TCAS 124 may indicate a resolution advisory that identifies safe and/or unsafe zones for rendering on the altimeter tape. These zones may be defined by particular target altitudes, which can be inserted into the altimeter tape in a manner akin to the altitude clearance elements described in more detail herein.

The appearance of an altitude clearance element may change when the geographic position of the aircraft is within close proximity to the immediately approaching geographical waypoint. This may be desirable to provide an early warning or notification to the pilot. Moreover, the appearance of the altitude clearance element may change when the aircraft passes the targeted geographical waypoint, regardless of whether the auto pilot feature is active. Such a change in appearance will convey to the pilot that the current geographic position of the aircraft is beyond the geographic position of certain waypoints. In yet other embodiments, the appearance of the altitude clearance element may change if the currently projected path of the aircraft does not satisfy the altitude restriction corresponding to an approaching waypoint. For example, if the system determines that the current flight profile and projected path will result in a violation of an altitude restriction at the approaching waypoint, then the altitude clearance element for that particular waypoint may change to notify the pilot (e.g., it might change color, begin to flash on and off, or the like).

In certain embodiments, the introduction, removal, changing, and/or movement of displayed altitude clearance elements may be controlled to make the presentation pleasing to the eyes, unobtrusive, not distracting, etc. For example, rather than having an altitude clearance element suddenly appear or disappear, it may be controlled such that it gradually fades in and out (using different transparency characteristics), enlarges and shrinks, scrolls in and out, or the like.

Although the exemplary embodiment described above relates to an altimeter tape, a flight deck system may also be configured to generate other types of graphical instrument tapes associated with other aircraft operating parameters, aircraft instrument data, avionics data, status conditions, or the like. For example, a graphical instrument tape may take the form of an airspeed tape that conveys airspeed information to the flight crew. Indeed, the primary display element of the flight deck system may incorporate both an airspeed tape (having the characteristics described in more detail below) and an altimeter tape (having the characteristics described above). In this regard, FIG. 7 is a schematic representation of an embodiment of a graphical airspeed tape 500.

Although not always required, the illustrated embodiment of airspeed tape 500 is rendered as a transparent or translucent window that overlays a graphical representation of terrain and/or a graphical representation of airspace, as described above for altimeter tape 300. Of course, alternate embodiments may utilize an opaque or solid airspeed tape 500 that obscures a portion of the underlying terrain or airspace. This embodiment of airspeed tape 500 generally includes, without limitation: an outline 502 that defines a primary region 504; a scrolling airspeed range or scale 506; and a focus window 508. Certain features, elements, and characteristics of airspeed tape 500 are similar to counterpart features, elements, and characteristics of altimeter tape 300. For the sake of brevity, common or equivalent aspects of the instrument tapes will not be redundantly described in detail here in the context of airspeed tape.

Scrolling airspeed range 506 dynamically scrolls within primary region 504 in response to the current airspeed of the aircraft, while outline 502 remains stationary relative to scrolling airspeed range 506. Focus window 508 is rendered such that it remains stationary relative to scrolling airspeed range 506, and such that the current airspeed value is rendered within focus window 508. The example depicted in FIG. 7 indicates a current airspeed that is between about 120 and 121 knots. Of course, the system need not use knots as the units for airspeed, and alternate embodiments may convey airspeed using other units, e.g., Mach numbers.

In addition to the current airspeed value, scrolling airspeed range 506 may also identify at least one additional airspeed value. In this regard, for the state depicted in FIG. 7, scrolling airspeed range 506 includes indicia of 90, 100, 110, 130, 140, and 150 knots. Moreover, due to its scrolling nature, scrolling airspeed range 506 may be rendered with only a portion of some numerical values shown at the top and bottom of primary region 504 (for example, FIG. 7 depicts the upper portion of the number 80 and the lower portion of the number 160). In operation, scrolling airspeed range 506 appears to move within primary region 504, while the current measured airspeed remains highlighted within focus window 508.

Airspeed tape 500 preferably includes a graphical representation of at least one position-dependent airspeed clearance element that conveys an airspeed restriction, constraint, regulation, or limitation for an approaching or current geographic position of the aircraft. FIG. 7 depicts an airspeed clearance element 510 corresponding to a currently approaching position, and another airspeed clearance element 512 corresponding to a past position. Depending upon the implementation and deployment of the host system, the data representing the graphical airspeed clearance elements may be included or otherwise associated with the onboard flight plan. Alternatively, the data representing the graphical airspeed clearance elements could be provided to the onboard system via, for example, ATC datalink 113 (see FIG. 1) for imbedding or incorporating into the onboard flight plan.

The appearance and content of a position-dependent airspeed clearance element may be influenced, based upon, or otherwise associated with the current geographic position data of the aircraft. For instance, a position-dependent airspeed clearance element may be tied to a geographical waypoint - FIG. 3 depicts the situation where airspeed clearance element 510 corresponds to the geographical waypoint labeled LACIV, and where airspeed clearance element 512 corresponds to the waypoint labeled WASAK. In practice, an airspeed clearance element may include alphanumeric indicia (i.e., a label) of the geographical waypoint, along with alphanumeric indicia of the corresponding airspeed value, values, or range. An airspeed value may be rendered as an additional entry on scrolling airspeed range 506 and, consequently, the position-dependent airspeed values can dynamically scroll with scrolling airspeed range 506. Moreover, the waypoint labels may also scroll with scrolling airspeed range 506. As mentioned above for altimeter tape 300, an airspeed clearance element that is associated with a past or approaching geographical waypoint, and which is no longer within the confines of scrolling airspeed range 506, may be rendered in a fixed location relative to outline 502.

An airspeed value rendered with airspeed tape 500 may represent an airspeed restriction, constraint, guideline, regulation, or limitation for a respective position, region, geographical waypoint, airspace boundary, airway, or the like. Preferred embodiments of the flight deck display system generate additional graphical indicia that convey supplemental information related to such airspeed values. For example, the airspeed tape may utilize the underlining and over-lining scheme described above to indicate whether a given airspeed constraint is an "at or above" constraint, an "at or below" constraint, or a target airspeed (or airspeed range).

It should be appreciated that some or all of the optional features and aspects of altimeter tape 300 may be ported in an equivalent manner for use with airspeed tape 500 (if applicable). For example, airspeed tape 500 may leverage any of the different color, font, texture, transparency, font size, underlining, over-lining, pattern, or other graphically distinguishing schemes as described above for altimeter tape 300. Moreover, airspeed tape 500 may be suitably designed to concurrently display additional navigation information, flight guidance information, safety warnings, and/or other useful data to the flight crew, as mentioned previously in the context of altimeter tape 300.

While at least one exemplary embodiment has been presented in the foregoing detailed description, it should be appreciated that a vast number of variations exist. It should also be appreciated that the exemplary embodiment or embodiments described herein are not intended to limit the scope, applicability, or configuration of the claimed subject matter in any way. Rather, the foregoing detailed description will provide those skilled in the art with a convenient road map for implementing the described embodiment or embodiments. It should be understood that various changes can be made in the function and arrangement of elements without departing from the scope defined by the claims, which includes known equivalents and foreseeable equivalents at the time of filing this patent application.

## Claims

1. A flight deck display system (100) for an aircraft, the system (100) comprising:
a processor architecture (104) configured to receive altitude data and aircraft geographic position data for the aircraft and, based upon the altitude data and the aircraft geographic position data, generate image rendering display commands; and
a display element (106) configured to receive the image rendering display commands and, in response thereto, to render a graphical altimeter tape (300) comprising a graphical representation of a scrolling altitude range (310) that dynamically scrolls in response to changes in the altitude data, and comprising a graphical representation of a position-dependent altitude clearance element (316) that conveys an altitude restriction for an approaching position of the aircraft; wherein
content and appearance of the position-dependent altitude clearance element (316) is influenced by the aircraft geographic position data.

2. The system (100) of claim 1, further comprising:
an altimeter subsystem (126) coupled to the processor architecture (104), and configured to obtain the altitude data; and
a positioning subsystem (111) coupled to the processor architecture, and configured to obtain the aircraft geographic position data.

3. The system (100) of claim 1, wherein the position-dependent altitude clearance element (316) dynamically scrolls with the scrolling altitude range (310).

4. The system (100) of claim 1, the position-dependent altitude clearance element (316) comprising:
alphanumeric indicia (316a) of an approaching geographical waypoint; and
an approaching altitude value (316b) corresponding to the approaching geographical waypoint.

5. The system (100) of claim 4, wherein the alphanumeric indicia (316a) and the approaching altitude value (316b) scroll with the scrolling altitude range (310).

6. The system (100) of claim 1, wherein:
the position-dependent altitude clearance element (316) corresponds to a geographical waypoint; and
the appearance of the position-dependent altitude clearance element (316) changes when the geographic position of the aircraft is within close proximity to the geographical waypoint.

7. The system (100) of claim 6, wherein the appearance of the position-dependent altitude clearance element (316) changes when the aircraft passes the geographical waypoint.

8. The system (100) of claim 1, wherein the appearance of the position-dependent altitude clearance element (316) changes if a projected path of the aircraft does not satisfy the altitude restriction.

9. A method for displaying altitude information on a flight deck display element (106) of an aircraft, the method comprising:
processing altitude data and position data for the aircraft;
obtaining position-dependent altitude restriction data based upon the position data; and
in response to the altitude data and the position-dependent altitude restriction data, displaying a dynamic graphical altimeter tape (300) on the flight deck display element (106), the dynamic graphical altimeter tape (300) comprising a graphical representation of a scrolling altitude range (310) that dynamically scrolls in response to changes in the altitude data, and comprising a graphical representation of an altitude clearance element (316) that is influenced by the position-dependent altitude restriction data.

10. The method of claim 9, wherein:
obtaining position-dependent altitude restriction data comprises accessing an onboard database (110, 112) having stored therein flight plan data comprising a geographical waypoint and an altitude value corresponding to the geographical waypoint; and
the altitude clearance element (316) comprises alphanumeric indicia (316a) of the geographical waypoint.

11. The method of claim 9, wherein:
obtaining position-dependent altitude restriction data comprises accessing an onboard database (110, 112) having stored therein flight plan data comprising a geographical waypoint and an altitude value corresponding to the geographical waypoint; and
the altitude clearance element (316) comprises alphanumeric indicia (316b) of the altitude value.

12. The method of claim 11, the altitude value representing a target altitude, an upper altitude limit, or a lower altitude limit for the geographical waypoint.

13. The method of claim 9, wherein displaying the dynamic graphical altimeter tape (300) comprises dynamically scrolling the altitude clearance element (316) in concert with the scrolling altitude range (310).
